(19) **Europäisches Patentamt**

**European Patent Office**

**Office européen des brevets**

(11) **EP 1 090 965 A2**

(12) **EUROPEAN PATENT APPLICATION**

(43) Date of publication:
**11.04.2001 Bulletin 2001/15**

(51) Int. Cl.[7]: **C09D 5/08**, C09D 163/00

(21) Application number: **00121804.9**

(22) Date of filing: **06.10.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **08.10.1999 JP 28802599**

(71) Applicant:
**SHIN-ETSU CHEMICAL CO., LTD.**
**Chiyoda-ku Tokyo (JP)**

(72) Inventors:
- **Yono, Masayoshi,**
  **c/o Enbi Gijutsu Kenkyusho**
  **Kashima-gun, Ibaraki-ken (JP)**
- **Watanabe, Mikio,**
  **c/o Enbi Gijutsu Kenkyusho**
  **Kashima-gun, Ibaraki-ken (JP)**

(74) Representative:
**Wolff, Felix, Dr.**
**Kutzenberger & Wolff**
**Theodor-Heuss-Ring 23**
**50668 Köln (DE)**

(54) **Rust preventive composition and method of preventing zinc or zinc alloys from rusting**

(57) A rust preventive composition is provided. The composition includes an epoxy resin, a hardener, an aromatic amine-based condensation product, and a compound selected from the group consisting of a silicic acid compound and a polyvinyl butyral resin. The composition is used to form a coating film on a metallic base which liable to rust, preferably on a coating film of phosphate which is previously formed on the base. The composition imparts a good corrosion resistance comparable to chromate treatment to metals, especially Zn and Zn-alloys, but is free from any sanitary anxiety such as carcinogenesis. The surface of metal treated therewith is black. Therefore, the composition is suited for primary rust-preventive treatment.

**EP 1 090 965 A2**

**Description**

BACKGROUND OF THE INVENTION

1. Field of the Invention

The present invention relates to a rust preventive composition and a rust preventing method useful in preventing surfaces of metallic materials including steel plates used in automobiles, building materials and so forth.

2. Description of the Prior Art

Plated steel plates, which are used as a material in automobiles, building, etc., such as steel plates plated with zinc or zinc-based alloy are used after painting. The plated steel plates are passed through a variety of steps before being painted; therefore they are left unpainted in the course of these steps for a considerably long time. So, while they are left unpainted, rust is generated or various substances are adsorbed or adheres, on the surfaces of the plated steel plates. As a result, for example, the adhesion of a paint applied in the subsequent step may be poor.

Therefore, the surfaces of plated steel plates have been subjected to chromate treatment as a primary rust prevention treatment. The corrosion resistance obtained by the chromate treatment is about 48 hours in the salt spray test defined in JIS Z-2371. However, the coating film obtained by the chromate treatment contains hexavalent chromium. It is known that the hexavalent chromium causes an allergy (chromate ulcer) when attaching to a skin, and also it is pointed out that the hexavalent chromium is suspected to be a carcinogen (carcinoma cutaneum). So, a primary rust prevention treatment not using chromate treatment is required.

Meanwhile, as a primary rust prevention treatment other than the chromate treatment there is proposed a method using a coating material for metal surfaces, which material is comprised of carboxyl-modified epoxy resin or polyvinyl butyral resin containing a silica. The use of the coating material results in a corrosion resistance equivalent to or higher than that obtained by the chromate treatment, but the appearance of the resulting coated metal surface is colorless or metallic. However, it is recently required that the metal surface coated by a primary rust prevention treatment has a black or blackish appearance so as to give a feeling of quality.

SUMMARY OF THE INVENTION

Accordingly, an object of the present invention is to provide a rust preventive composition and a rust preventing method using the composition, suitable as a primary rust prevention treatment, which exhibits a corrosion resistance equivalent to the chromate treatment, and in addition gives no fear of a health problem such as carcinogenesis, and provides a black or blackish appearance to the treated metal surface.

The present inventors have earnestly studied in order to satisfy the above requirements, and as a result, have completed the present invention.

Thus, the present invention provides a rust preventive composition comprising an epoxy resin, a hardener, an aromatic amine-based condensation product, and a compound selected from the group consisting of a silicic acid compound and a polyvinyl butyral resin.

The present invention also provides a method of preventing zinc or a zinc alloy from rusting, which comprises forming a coating film or a phosphate on the surface of a base comprised of zinc or a zinc alloy, and forming a coating film of the composition stated above on said film of a phosphate.

DETAILED DESCRIPTION OF THE PREFERRED EMBODIMENTS

The present invention will now be described below in more detail.

Composition for Preventing Rusting:

The composition for preventing rusting according to the present invention comprises (a) an epoxy resin, (b) a hardener, (c) an aromatic amine-based condensation product, and a compound selected from the group consisting of (d) a silicic acid compound and (e) a polyvinyl butyral resin.

(a) Epoxy resin

The epoxy resin includes, for example, bisphenol A type epoxy resin, arid carboxyl-modified epoxy resin.

(b) Hardener

The hardener is used for the epoxy resin (a) and serves to improve the performance of the coating film. The hardener preferably includes resins having a hydroxyl group. The hydroxyl-containing resins include amino resins, blocked polyisocyanate resins and phenol resins. Of these, preferred is the amino resins.

The amino resins include, for example, melamine resins such as a melamine resin, a butylated melamine resin, and a methylated melamine resin; urea resins such as a urea resin and a butylated urea resin; and benzoguanamine resin. Of these, preferred is melamine resins. When an amino resin is used as a hardener, a curing catalyst such as p-toluenesulfonic acid and naphthalenesulfonic acid may be added to accelerate the reaction with the amino resin.

The amount of the hardener (b) is normally in the range of 10 to 150 parts by weight, preferably 30 to 100 parts by weight, per 100 parts by weight of the epoxy resin. The amount of the hardener outside the range above may result in insufficiency of durability or corrosion resistance, lowering of hardness after hardening or poor adhesion of the coating film.

(c) Aromatic amine-based condensation products

The aromatic amine-based condensation products used in the present invention are exemplified by:

(A) an aromatic amine compound condensation product.
(B) an alkali-treated product of the aromatic amine compound condensation product (A).
(C) a higher fatty acid-treated product or aromatic carboxylic acid-treated product of the aromatic amine compound condensation product (A), and
(D) an alkylation product, alkenylation product and aralkylation product of the aromatic amine compound condensation product (A). These compounds may be used singly or in combination of two or more.

The aromatic amine compound condensation product (A) used includes preferably one having a weight-average molecular weight in the range of 1,000 to 100,000 in terms of polystyrene when measured by gel permeation chromatography (GPC), and particularly 1,500 or 50,000 from the viewpoint of obtaining good corrosion resistance.

In the present invention, from the viewpoint of corrosion resistance, the following are preferably used:

(B) the alkali-treated product of an aromatic amine compound condensation product (A),
(C) the higher fatty acid-treated product or aromatic carboxylic acid-treated product of an aromatic amine compound condensation product (A), and
(D) the alkylation product, alkenylation product and aralkylation product of an aromatic amine compound condensation product (A).

Further from the viewpoint of humidity resistance and prevention of a base oil from separating and diffusing (bleeding), the following are preferably used:

(C) the higher fatty acid-treated product or aromatic carboxylic acid-treated product of an aromatic amine compound condensation product (A), and
(D) the alkylation product, alkenylation product and aralkylation product of an aromatic amine compound condensation product (A).

《A) Aromatic amine compound condensation products 》

The aromatic amine compound condensation products include, for example:

(1) a self-condensation product of an aromatic amine compound;
(2) a condensation product of an aromatic amine compound with an aromatic hydroxyl compound;
(3) a condensation product of an aromatic amine compound with an aromatic nitro compound; and
(4) a condensation product of an aromatic amine compound with a quinone compound.

The aromatic amine compounds are exemplified by aminobenzenes such as aniline, o-, m- or p-phenylenediamine, o-, m- or p-aminophenol, o-, m- or p-chloroaniline, p-aminobenzene, 2,4-diaminoazobenzene, p-aminoacetanilide, o-, m- or p-methylaniline, N,N-dimethyl-p-phenylenediamine, 4-chloro-o-phenylenediamine, 4-methoxy-o-phenylenediamine, 2-amono-4-chlorophenol, 2,3-diaminotoluene, 2,4-diaminophenol, o-, m-, or p-aminobenzoic acid, 2,3-, 2,4-, 2,5-, 2,6-, 3,4-, 3,5- or 4,6-diaminobenzoic acid, 3- or 4-aminophthalic acid, 2-, 4- or 5-aminoisophthalic acid, 4,6-diaminoisophthalic acid, 2,5- or 2,6-diaminoterephthalic acid, 3-, 4- or 5-aminosalicylic acid, 4-hydroxyanthranylic acid, o-, m-, or p-aminobenzenesulfonic acid, 2,3-, 2,4-, 2,5-, 2,6-, 3,4- or 3,5-diaminobenzenesulfonic acid, 2-amino-1-phenol-4-sulfonic acid, and 6-amino-4-chloro-1-phenol-2-sulfonic acid; diphenylamines such as 4-aminodiphenylamine, 2-aminodiphonylamine, 4,4'-diaminodiphenylamine, 4-amino-3'-methoxydiphenylamine, 4-amino-4'-hydroxydiphenylamine, 4-carboxydiphenylamine, 4-amino-4'-carboxydiphenylamine, 4-sulfodiphenylamine and 4-amino-4'-sulfodiphenylamine; and aminonaphthalenes such as $\alpha$-naphthylamine, $\beta$-naphthylamine, 1,5-diaminonaphthalene, 1-amino-5-hydroxynaphthalene, 1,8-diaminonaphthalene, 2,3-diaminonaphthalene, 4-amino-1-naphthol, 1-amino-5-naphthol, 1,2-naphthylenediamine-7-carboxylic acid, 1,5-naphthylenediamine-2-carboxylic acid, 1,5-naphthylenediamine-4-carboxylic acid, 1,6-naphthylenediamine-4-carboxylic acid, 1,8-naphthylenediamine-4-carboxylic acid, 1,2-naphthylenediamine-3-sulfonic acid, 1,2-naphthylenediamine-4-sulfonic acid, 1,2-naphthylenediamine-5-sulfonic acid, 1,2-naphthylenediamine-6-sulfonic acid, 1,2-naphthylenediamine-7-sulfonic acid, 1,3-naphthylenediamine-5-sulfonic acid, 1,3-naphthylenediamine-6-sulfonic acid, 1,4-naphthylenediamine-2-sulfonic acid, 1,4-naphthylenediamine-7-sulfonic acid, 1,5-naphthylenediamine-2-sulfonic acid, 1,5-naphthylenediamine-4-sulfonic acid, 1,5-naphthylenediamine-7-sulfonic acid, 1,6-naphthylenediamine-2-sulfonic acid, 1,6-naphthylenediamine-4-sulfonic acid, 1,6-naphthylenediamine-7-sulfonic acid. 1,8-naphthylenediamine-4-sulfonic acid, 1,8-naphthylenediamine-3,6-disulfonic acid, 1,8-naphthylenediamine-4,5-disulfonic acid, $\alpha$-amino-$\beta$-naphthalenepropionic acid, $\alpha$-amino-$\beta$-naphthalenecarboxylic acid, 2-naphthylamine-1-sulfonic acid, 8-naphthylamine-1-sulfonic acid, 5-naphthylamine-1-sulfonic acid, 1-amino-2-naphthol-4-sulfonic acid, 2-amino-8-naphthol-6-sulfonic acid ($\gamma$ acid), 2-amino-5-naphthol-7-sulfonic acid (J acid) and 1-amino-8-naphthol-3,6-disulfonic acid (H acid).

The aromatic hydroxyl compounds are exemplified by phenols and phenol derivatives, such as phenol, hydroquinone, resorcinol, catechol, hydroxyhydroquinone, pyrogallol, o-, m-or p-chlorophenol, o-, m- or p-hydroxybenzoic acid, 2,4-dihydroxybenzoic acid, 2,5-dihydroxybenzoic acid, 2,6-dihydroxybenzoic acid, 3,4-dihydroxybenzoic acid, 3,5-dihydroxybenzoic acid and 2,5-, 2,6- or 3,5-dihydroxytoluene.

In addition thereto, the aromatic hydroxyl compounds are exemplified by naphthols and naphthol derivatives such as $\alpha$-naphthol, $\beta$-naphthol, 1,3-, 1,4-, 1,5-, 2,3-, 2,6- or 2,7-dihydroxynaphthalene, 1-hydroxy-2-naphthoic acid and 3-hydroxy-2-naphthoic acid.

The aromatic nitro compounds are exemplified by nitrobenzene, o-, m- or p-hydroxynitrobenzene, o-, m- or p-nitroanisole, o-, m- or p-nitrophenetole, o-, m- or p-chloronitrobenzene, o-, m- or p-aminonitrobenzene, o-, m- or p-nitrobenzoic acid, o-, m- or p-nitrobenzenesulfonic acid, o-, m- or p-nitroaniline, 2-nitro-p-phenylenediamine, 2-amino-4-nitrophenol, 2-amino-5-nitrophenol and 4-amino-2-nitrophenol.

The quinone compounds include, for example, benzoquinones and derivatives thereof, such as o-, m- or p-benzoquinone, tolu-p-quinone, o-xylo-p-quinons, thymoquinone, 2-methoxybenzoquinone, gentisyl quinone, polyporic acid and ubiquinone-n; naphthoquinones and derivatives thereof, such as 6-methyl-1,4-naphthoquinone, 2-methyl-1,4-naphthoquinone, $\alpha$-naphthoquinone, juglone, lawsone, plumbagin, alkannin, echinochrome A. vitamin $K_1$, vitamin $K_2$, shikonin, $\beta,\beta'$-dimethyl acrylshikonin, $\beta$-hydroxyisovaleroshikonin and teracrylshikonin; anthraquinones and derivatives thereof, such as tectoquinone, 3-hydroxy-2-methylanthraquinone, anthraquinone, 2-hydroxyanthraquinone, alizarin, xanthopurpurin, rubiadin, munjistin, crysophanic acid, carminic acid, kermesic acid and laccaic acid A; and phenanthrenequinones such as phenanthrenequinone.

In order to carry out the self-condensation reaction of an aromatic amine compound alone, the condensation reaction of an aromatic amine compound with an aromatic hydroxyl compound and the condensation reaction of an aromatic amine compound with an aromatic nitro compound, a mineral acid and a condensation catalyst are used. The mineral acids are exemplified by hydrochloric acid, nitric acid, hydrobromic acid, phosphoric acid and sulfuric acid. The condensation catalysts are preferably exemplified by permanganic acid and salts thereof, such as permanganic acid and potassium permanganate; chromic acid-related compounds, such as chromium trioxide, potassium dichromate and sodium chlorochromate; metal nitrates, such as silver nitrate and lead nitrate; halogens, such as iodine and bromine; peroxides, such as hydrogen peroxide, sodium peroxide, benzoyl peroxide, potassium persulfate, ammonium persulfate, peracetic acid, cumene hydroperoxide, perbenzoic acid and p-menthane hydroperoxide; oxygen acids or oxygen acid salts, such as iodic acid, potassium iodate and sodium chlorate; metal salts, such as ferrous chloride, ferric chloride, copper sulfate, cuprous chloride, cupric chloride and lead acetate; ozone; and oxides, such as copper oxide, mercury oxide, cerium oxide, manganese dioxide and osmic acid. It is also effective to use hydrogen peroxide and ferrous chloride in combination.

The self-condensation reaction of an aromatic amine compound alone, the condensation reaction of an aromatic amine compound with an aromatic hydroxyl compound and the condensation reaction of an aromatic amine compound with an aromatic nitro compound may be carried out in the presence of a condensation catalyst at 100 to 350 °C for 2 to 100 hours.

The proportion of an aromatic amine compound and an aromatic hydroxyl compound or an aromatic nitro compound, which are used in the condensation reaction of an aromatic amine compound with an aromatic hydroxyl compound and the condensation reaction of an aromatic amine compound with an aromatic nitro compound, depends on the aromatic amine compound, aromatic hydroxyl compound and aromatic nitro compound and the catalyst used, the reaction time, the reaction temperature and so forth. Generally, it is preferable to use from 0.1 to 10 moles of the aromatic hydroxyl compound or the aromatic nitro compound per mole of the aromatic amine compound.

The condensation reaction of an aromatic amine compound with a quinone compound is carried out in an organic solvent medium, optionally in the presence of a condensation catalyst. The organic solvent medium preferably has a pH within the range of from 1 to 13.5 and a pH adjuster may be used without any particular limitations. Usable pH adjusters include various acidic compounds and alkali compounds. The acidic compounds are exemplified by phosphoric acid, sulfuric acid, phytic acid and acetic acid; and alkali compounds are exemplified by alkali metal compounds or ammonium compounds, such as $LiOH$, $KOH$, $NaOH$, $Na_2CO_3$ $Na_2SiO_3$, $Na_2HPO_4$ and $NH_4OH$; and organic amine compounds, such as ethylenediamine, monoethanolamine and triethanolamine.

As the medium for the condensation reaction, organic solvents exemplified by alcohols, ketones and esters, or mixed solvents of water and hydrophilic organic solvents miscible with water are preferred. Usable hydrophilic organic solvents include, for example, alcohols, such as methanol, ethanol and propanol; ketones, such as acetone and methyl ethyl ketone; and esters, such as methyl acetate and ethyl acetate.

The condensation catalyst may be optionally used which is exemplified by azo catalysts such as $\alpha,\alpha'$-azobi-sisobutylonitrile and $\alpha,\alpha'$-azobis-2,4-dimethylvaleronitrile; elementary or molecular halogens, such as iodine, bromine and chlorine; peroxides, such as hydrogen peroxide, sodium peroxide, benzoyl peroxide, perbenzoic acid and p-menthane hydroperoxide; oxygen acids or oxygen acid salts, such as iodic acid, periodic acid, potassium periodate and sodium perchlorate. Incidentally, since the quinone compound acts as a condensation catalyst, the condensation reaction of an aromatic amine compound and a quinone compound takes place even in the absence of a condensation catalyst.

The condensation reaction can be normally carried out at 20 to 200 °C for 0.5 to 100 hours.

The proportion of an aromatic amine compound and a quinone compound in the condensation reaction of the aromatic amine compound and the quinone compound depends on the sort of the aromatic amine compound, quinone compound and catalyst used, the reaction time and the reaction temperature. In the present invention, it is preferable to use from 0.1 to 10.0 mols of the quinone compound per mol of the aromatic amine compound.

《B) Alkali-treated product of an aromatic amine compound condensation product (A)〉

Component (B), the alkali-treated product of an aromatic amine compound condensation product (A) is prepared by treating the aromatic amine compound condensation product (A), which is obtained in the presence of an acidic catalyst or in an acidic medium, with an alkali.

The method for treating the aromatic amine compound condensation product with an alkali is carried out by first dispersing the aromatic amine compound condensation product in water to prepare a 0.1 to 50 wt.% aqueous dispersion of the aromatic amine compound condensation product. Then, to the resulting dispersion is added an inorganic alkaline compound such as $NaOH$, $KOH$, $Na_2CO_3$, $NH_4OH$ or $(NH_4)_2CO_3$ in an amount of 10 to 20 parts by weight per 100 parts by weight of the aromatic amine compound condensation product and the mixture thus obtained is heat-treated at 90 to 140 °C for 0.5 to 10 hours. The amount of the alkaline compound used is to be sufficient to neutralize the acidic compound used in the condensation reaction for production for of the aromatic amine compound condensation product.

《C) Higher fatty acid-treated product or aromatic carboxylic acid-treated product of an aromatic amine <u>compound</u> condensation product (A)〉

Component (C), the higher fatty acid-treated product or aromatic carboxylic acid-treated product of an aromatic amine compound condensation product (A) is prepared by treating the aromatic amine compound condensation product (A) and/or the above alkali-treated product (B) of an aromatic amine compound condensation product with a higher fatty acid, an alkali metal salt or ammonium salt thereof, or an aromatic carboxylic acid or an alkali metal salt or ammonium salt thereof (hereinafter, referred to as "fatty acid and the like."). The higher fatty acids include, for example, hodinic acid, palmitic acid, stearic acid, oleic acid or linolic acid. The aromatic carboxylic acids include, for example, tannic acid or shellac acid.

The higher fatty acid-treated product and the aromatic carboxylic acid-treated product can be used singly or in combination of two or more.

The method for treating the aromatic amine compound condensation product (A) with a fatty acid and the like is carried out by first mixing a fatty acid and the like in an amount of 5 to 1,000 parts by weight per 100 parts by weight of the aromatic amine compound condensation product (A) and/or (B) the alkali-treated product thereof (B). Then, the resulting mixture is heat-treated at a temperature slightly higher than the melting point of the fatty acid and the like used (about 40 to 250 °C). Further, after the treated product thus obtained is optionally washed with water, the treated product is charged into water to allow it to precipitate. Thus, the higher fatty acid-treated product or aromatic carboxylic acid-treated product (C) of an aromatic amine compound condensation product is produced.

Incidentally, a solvent such as dioxane, N,N-dimethylformamide, 1,3-dimethyl-2-imidazolidinone, N,N-dimethylacetamide and N-methyl-2-pyrrolidone is preferably used at the step of mixing (A) the aromatic amine compound condensation product and/or (B) the alkali-treated product thereof with the fatty acids and the like, since the solubility of the resulting mixture is increased and the treatment with a higher fatty acid or an aromatic carboxylic acid is more sufficiently carried out.

Among the higher fatty acid-treated product and the aromatic carboxylic acid-treated product exemplified above, preferred is the higher fatty acid-treated product.

《(D) Alkylation product, alkenylation product and aralkylation product of an aromatic amine compound condensation product (A)》

Component (D), the alkylation product, alkenylation product and aralkylation product of an aromatic amine compound condensation product (A) can be prepared by reacting the aromatic amine compound condensation product (A) and/or the alkali-treated product thereof (B) with an alkyl halide, alkenyl halide, aralkyl halide or a mixture thereof in an organic solvent.

The alkylation product, alkenylation product and aralkylation product thus obtained can be used singly or in combination of two or more thereof. Incidentally, a mixture of at least two of the alkylation product, alkenylation product and aralkylation product can be obtained by using a mixture of corresponding at least two of the alkyl halide, alkenyl halide and aralkyl halide, in the reaction above.

The alkyl halide used includes, for example, n-propyl bromide, n-butyl chloride, n-butyl bromide, isobutyl bromide, 2-ethylhexyl bromide, n-octyl bromide, n-octyl chloride, dodecyl bromide, cetyl bromide, stearyl bromide and stearyl chloride.

The alkenyl halide includes, for example, allyl chloride, allyl bromide, isopropenyl chloride, isopropenyl bromide, oleyl chloride and oleyl bromide.

The aralkyl halide includes, for example, benzyl chloride, benzyl bromide, β-phenylethyl chloride, β-phenylethyl bromide, p-methylbenzyl chloride, p-methylbenzyl bromide. p-ethylbenzyl chloride, p-ethylbenzyl bromide, cinnamyl chloride, cinnamyl bromide, p-octylbenzyl chloride, p-octylbenzyl bromide, styryl chloride, styryl bromide, phenetyl chloride and phenetyl bromide.

The organic solvent used in the above reaction includes, for example, dioxane, N,N-dimethylformamide, dimethyl sulfoxide, dimethylaniline, dimethylbenzylimine, nitrobenzene, N,N-dimethylacetamide, 1,3-dimethyl-2-imidazolidinone and N-methyl-2-pyrrolidone.

The reaction temperature is generally in the range of 10 to 200°C. During dropwise-addition of a halide, however, preferably the reaction mixture is kept at a temperature of the boiling point of the solvent or less. After the dropwise-addition, preferably the reaction mixture is heated to a prescribed temperature for proceeding the reaction.

Although the reaction time can be made short by raising the reaction temperature, it generally ranges form 1 to 10 hours after the dropwise-addition of the halide.

Further, preferably an alkaline compound is used in the above reaction. The alkaline compound includes, for example, LiOH, KOH, NaOH, $Na_2CO_3$, $Na_2SiO_3$, $Na_2HPO_4$, $Li_2CO_3$, $K_2CO_3$ and $CaCO_3$

Alkylation of the aromatic amine compound condensation product is carried out by first dispersing or dissolving the aromatic amine compound condensation product (A) and/or the alkali-treated product thereof (B) in said organic solvent to prepare a 0.01 to 20 wt.% dispersion or solution and then dropwise adding thereto the above halide in an amount of 10 to 300 parts by weight, preferably 50 to 150 parts by weight, per 100 parts by weight of the condensation product (A) and/or the alkali-treated product (B). Further, the alkali compound stated above is optionally added in an amount of 10 to 500 parts by weight, preferably 30 to 300 parts by weight, per 100 parts by weight of the condensation product (A) and/or the alkali-treated product (B). Generally in the case of adding the alkali compound, it is preferably added prior to the dropwise-addition of the halide. Thereafter, the reaction mixture is heated to a prescribed temperature and then reacted for a prescribed time. After the end of reaction, the resulting reaction mixture is cooled and charged into water to allow to precipitate and/or to disperse the reaction product, followed by filtering, washing with water, and drying. Thus, the alkylation product, alkenylation product or aralkylation product is produced.

The aromatic amine-based condensation product (c) is used in an amount of 1 to 200 parts by weight, preferably 5 to 100 parts by weight per 100 parts by weight of the epoxy resin (a).

(d) Silicic acid compound and (e) Polyvinyl butyral resin

The composition according to the present invention includes at least one compound selected from the group consisting of (d) a silicic acid compound and (e) a polyvinyl butyral resin. Preferably, both of the silicic acid compound and the polyvinyl butyral resin are contained.

- Silicic acid compound (d):

The silicic acid compound is preferably silicic acid esters, colloidal silica and alkali metal silicates.

The silicic acid esters include, for example, alkoxy silane compounds such as tetramethoxysilane, tetraethoxysilane, tetra-n-propoxysilane, tetra-i-propoxysilane, tetra-n-butoxysilane, tetra-i-butoxysilane, tetra-t-butoxysllane, methyltrimethoxysilane, methyltriethoxysilane, methyltri-n-propoxysilane, methyltri-i-propoxysilane, methyltri-n-butoxysilane and methyltri-t-butoxysilane; and condensates of these alkoxysilane compounds.

The condensates of alkoxysilane compounds can be generally produced by partially hydrolyzing the alkoxysilane compound and then condensing the hydrolysis product. The condensates of alkoxysilane compounds include, for example, ethoxypolysiloxane, which is a condensate of tetraethoxysilane, (Trade name: "Ethyl silicate-40", produced by Tama Kagaku Kogyo K.K.)

The colloidal silica is a colloid containing super fine particles with a diameter of 5 to 500 nm of silicon dioxide (silica) dispersed in a dispersion medium including an aqueous medium or a non-aqueous medium such as methanol, propanol or ethylene glycol.

Process of producing colloidal silica is not limited at all. As typical methods for producing a colloidal silica in which silica particles are dispersed in an aqueous medium, there is known a method producing a colloidal silica by adding hydrochloric acid to an aqueous solution of sodium silicate. There is also known a method producing a colloidal silica by adding a small amount of water and ethylamine as a catalyst to silicic acid esters such as tetraethoxysilane in an organic solvent such as isopropyl alcohol to subject the silicic acid esters to hydrolysis reaction.

The alkali metal silicates include, for example, metasilicates ($M_2SiO_3$), orthosilicates ($M_4SiO_4$), disilicates ($M_2Si_2O_3$), trisilicates ($M_3Si_3O_7$) and sesquisilicates ($M_4Si_3O_{10}$) (wherein in these formulae, M represents an alkali metal such as lithium, sodium or potassium), of alkali metals; and water glass. Among the silicic acid compounds, preferred is colloidal silica from the viewpoint of obtaining better corrosion resistance.

The amount of the silicic acid compound is normally 1 to 200 parts by weight, preferably 5 to 100 parts by weight per 100 parts by weight of the epoxy resin.

- Polyvinyl butyral resin (e):

The polyvinyl butyral resin is normally used in an amount of 1 to 100 parts by weight, preferably 4 to 50 parts by weight, more preferably 4 to 30 parts by weight per 100 parts by weight of the epoxy resin.

(f) Optional components

To the compound according to the present invention may be optionally added materials or substances exemplified below.

-Solvent-

When the rust preventive composition of the present invention is used as a coating agent for metallic surfaces, for instance, a solvent is normally added, thus the composition being prepared as a liquid one. The solvents includes, for example, aliphatic hydrocarbons such as hexane; aromatic hydrocarbons such as toluene, xylene, cyclohexanone and tetrahydrofuran; esters such as ethyl acetate and butyl acetate; ketones such as methyl isobutyl ketone; alcohols such as methanol, ethanol and propyl alcohol; formamides such as N,N-dimethylformamide and N,N-diethylformamide; acetamides such as N,N-dimethylacetamide and N,N-diethylacetamide; dioxane; N-methyl-2-pyrrolidone; 1,3-dimethyl-2-imidazolidinone; and isophorone. These organic solvents can be used as a mixture with water in an amount in the range of not impairing the effects of the present invention.

The liquid composition described above is generally prepared by dissolving or dispersing the components (a), (b), (c), and (d) and/or (e) described above. The total concentration of these components is normally 0.1 to 40 % by weight, preferably 1 to 30 % by weight, based on the total weight of the liquid composition.

-Polymeric compound-

The polymeric compound includes, for example, polyvinyl alcohol, polyacrylic acid, polyvlnylphenol resin, e.g., poly p-vinylphenol, a copolymer of p-vinylphenol and 2-hydroxyethyl methacrylate, bromides of poly p-vinylphenol, a copolymer of p-vinylphenol and styrene, a copolymer of p-vinylphenol and butyl acrylate, pectin, shellac, alginic acid, starch, chitin, chitosan, polyvinyl acetal, polyester resin, alkid resin, urethane resin, polyalkylene glycol, and copolymers or vinyl acetate and vinyl alcohol. These polymeric compounds can be used singly or in combination of two or more.

-Inorganic acid and/or Organic acid-

The inorganic acid includes preferably phosphoric acids such as, e.g., phosphoric acid, pyrophosphoric acid and tripolyphosphoric acid.

The organic acid includes, for example, benzoic acid, salicylic acid, tannic acid, glycolic acid, gallic acid, toluenesulfonic acid, phitic acid, citric acid and tartaric acid. These inorganic acids and organic acids can be used singly or in combination of two or more.

-Other additives-

Other additives which may be added include surface active agents such as anionic, cationic, nonionic or amphoteric surface active agents; waxes such as paraffin wax, montan wax, fatty amide wax, and polyethylene wax; viscosity adjuster; and UV absorber.

Use of the Rust Preventive Composition:

The composition according to the present invention is used as a coating material to be applied on metallic surfaces, after addition of a solvent, as described above. Objectives to which the composition is applied include surfaces of bases made of any metals which require rust proofing or which are liable to rust, without any limitation. The shape of the bases is also not limited, and includes shapes of block, spheres, rods, plates, and films. The metals constituting the base includes, for example, iron and iron-based alloys, aluminum and aluminum-based alloys, copper and copper-based alloys, zinc and zinc-based alloys, nickel and nickel-based alloys, and tin and tin-based alloys. The composition of the invention is preferably applied to zinc and zinc-based alloys, which may be present as a single zinc or Zn-Ni alloys such as Zn-Fe alloys, Zn-Co alloys, Zn-Fe-Co alloys Zn-Al alloys or Sn-Zn alloys.

Where the base consists of zinc singly, it may have a purity of 99 % by weight or higher. Where the base consists of a zinc-based alloy, the alloy may contain zinc in an amount of 5 % by weight or higher, preferably 7 to 99.9 % by weight, most preferably 60 to 99.9 % by weight.

Methods of applying the rust preventive composition of the present invention are not particularly limited, and include roll coating, spray coating, shower coating, solution casting and electrodeposition coating.

Method of rust prevention:

The method of rust prevention according to the present invention, comprises forming a coating film of a phosphate on the surface of a base comprised of zinc or a zinc alloy, and forming a coating film of the composition described above.

The coating film of the phosphate can be formed by the known phosphate coating process conventionally used. For example, treatment of surfaces of a base with an aqueous phosphoric acid solution or with a phosphoric acid solution in a water/methanol mixed solvent, can form a phosphate coating film on the surfaces. Methods of the treatment include dipping, spraying and applying. The treatments may be conducted at room temperature or, if necessary, at an elevated temperature of about 50 to 98 °C.

The phosphate for the coating film formed on the surfaces of the base includes, for example, ones such as zinc phosphate.

The shape of the base, the objective to which the phosphate coating process is applied, and the zinc or zinc alloys constituting the base have been described in detail above.

The method of rust prevention according to the present invention can markedly improve the corrosion resistance of zinc or zinc-based alloys.

EXAMPLES

In the following, coating liquids or experiments marked with * are those not meeting the requirements of the present invention.

Production of Aromatic Amine-based Condensation Products

As aromatic amine-based condensation products (a), Condensation Products A-(1), A-(2), A-(3) and A-(4) were produced by the condensation reactions as mentioned below, and the weight-average molecular weight in terms of polystyrene were measured by gel permeation chromatography (GPC) under the following measurement conditions.

Columns:

Guard column:

Tradename: slim-pack GPC-800DP, manufactured by Shimadzu Corporation.

Analytical columns:

Tradename: slim-pack GPC-803D, 802D, manufactured by Shimadzu Corporation.

Mobile phase: 10 mM LiBr/DMF
Flow rate: 1.0 ml/min
Detector: RI
Temperature: 60 °C

Further, alkali-treated products B-(1) and B-(3), and higher fatty acid-treated products C-(1) and C-(3) were produced using the condensation products A-(1) and A-(3) obtained, and an aralkylation product D-(3) was produced using the alkali-treated product B-(3) obtained.

Production of Condensation Product A-(1)

Into a pressure resistant reaction vessel, 100 moles (10.9 kg) of p-aminophenol and 0.99 kg (9.5 moles as HCl) of 30% hydrochloric acid were charged, and the temperature of the resulting mixture was raised to 169 °C. When the temperature reached 169 °C, 18 liters of xylene was slowly added for the purpose of removing the water generated during condensation reaction as an azeotropic mixture. Then, the temperature of the reaction mixture was raised to 222 °C and reacted at this temperature for 3 hours. The mixed vapor of xylene and water generated during reaction was removed and the internal pressure was kept at 150 kPa. After reacting for 3 hours, the reaction mixture was cooled. The reaction product obtained was solid. Next, the reaction product was pulverized into fine particles, followed by washing with water, filtering and drying to obtain Condensation Product A-(1). This condensation product had a weight-average molecular weight of 2,500.

Production of Condensation Product A-(2)

Into a pressure resistant reaction vessel, 100 moles (10.8 kg) of m-phenylenediamine, 200 moles (22.0 kg) of resorcinol and 1.04 kg (10 moles as HCl) of 35% hydrochloric acid were charged, and the temperature of the resulting mixture was raised to 305 °C. Immediately after the temperature of the mixture in the reaction vessel reached 305 °C, the reaction mixture was cooled. The water steam produced during the rise in temperature and the reaction was removed, and the internal pressure was kept at 150 kPa. After cooling, a condensation product of m-phenylenediamine was obtained, which was pulverized to obtain as Condensation Product A-(2). This condensation product had a weight-average molecular weight of 3,000.

Production of Condensation Product A-(3)

A mixture of 100 moles of aniline, 31 moles of hydrochloric acid, 22.7 moles of nitrobenzene and 0.103 mole of ferric chloride was heated at 60 °C for 6 hours in a reaction vessel. Then, the temperature was raised to 180 to 185 °C to react the mixture at the temperature for 15 hours while water was evaporated off. During the reaction, a part of aniline and a part of nitrobenzene together with the water were evaporated off. The evaporated aniline and nitrobenzene were recovered and recycled to the reaction vessel. Next, the internal pressure was further raised to 200 °C and the reaction mixture was heated at this temperature for 5 hours.

The thus obtained reaction mixture in a melted form was charged into a dilute hydrochloric acid and heated to 60 °C for 3 hours, followed by hot-filtering to remove unreacted aniline. The reaction mixture was further washed 5 to 6 times with water in order to remove excess hydrochloric acid and then dried to obtain Condensation Product A-(3). This condensation product had a weight-average molecular weight of 15,000.

Production of Condensation Product A-(4)

Into a pressure resistant reaction vessel, 30,000 moles (960 kg) of methanol, 100 moles (15.8 kg) of 1,8-diaminonaphthalene, 50 moles (5.4 kg) of p-benzoquinone were charged. To the resulting mixture, 159 moles (20 kg) of pyrogallol was added and reacted at 60 °C for 20 hours. Then. 1,000 kg of water was charged into the reaction mixture and the resulting condensate was settled. The sediment thus obtained was filtered, washed and dried to obtain Condensation Product A-(4). This condensation product had a weight-average molecular weight of 12,000.

Production of Condensation Product B-(1) (Alkali-treated Product)

In 5.0 kg of water. 1.0 kg of the above Condensation Product A-(1) was dispersed and 0.1 kg of NaOH was added thereto. Thereafter, the resulting mixture was heated up to 130 °C and heat-treated at this temperature for 2 hours. After cooling, the liquid reaction product was filtered, washed with water, and dried to obtain Alkali-treated Product B-(1).

Production of Condensation Product B-(3) (Alkali-treated Product)

In 5.0 kg of water, 1.0 kg of the above Condensation Product A-(3) was dispersed and 0.2 kg of NaOH was added thereto. Thereafter, the resulting mixture was heated up to 100 °C and heat-treated at this temperature for 4 hours. After cooling, the reaction product was filtered, washed with water, and dried to obtain Alkali-treated Product B-(3).

Production of Condensation Product C-(1) (Higher fatty acid-treated Product)

To 1.0 kg of the above Condensation Product A-(1), 1.0 kg of lithium stearate was added. The resulting mixture was heated up to 230 °C and treated at this temperature for 1 hour. After cooling, the reaction product obtained was pulverized into fine particles, followed by washing with water, filtering and drying to obtain Higher fatty acid-treated Product C-(1).

Production of Condensation Product C-(3) (Higher fatty acid-treated Product)

To 0.5 kg of the above Condensation Product A-(3), 1.0 kg of oleic acid was added. The resulting mixture was heated up to 100 °C and treated at this temperature for 2 hours. After cooling, the reaction product was pulverized into fine particles, to obtain Higher fatty acid-treated Product C-(3) in the form of fine particles.

Production of Condensation Product D-(3) (Aralkylation Product)

Into a reaction vessel provided with a stirrer, a dropping funnel, a condenser. etc., 1.0 kg of the above Alkali-treated Product B-(3) was charged and then 10 kg of dimethylformamide was charged, and subsequently stirring was started.

Next, after adding 1.0 kg of anhydrous potassium carbonate as an alkali agent, the resulting mixture was heated up to 80 °C and kept at this temperature. To the mixture, 250 g of benzyl chloride was dropwise added over 2 hours, and stirring was kept at 80 °C for 1 hour.

Then, the reaction mixture was heated up to 120 °C and stirred at this temperature for 2 hours, followed by cooling. The reaction mixture was charged into 90 liters of water. After the resulting mixture was stirred for 1 hour, it was filtered, washed with water, and dried to obtain Aralkylation Product D-(3).

Preparation (I) of Solutions (I)

40 g of an aromatic amine-based condensation product (c) as given in Table 1 was added to and dissolved in 770 g of a mixed solvent of tetrahydrofuran/1,3-dimethyl-2-imidazolidine having a weight ratio of 6/1 to prepare a solution. Thus, Solution Nos. 11-19, which are also generically referred to as Solution (I).

Table 1

| Solution No. | (a) Aromatic amine-based condensation product |
|---|---|
| 11 | A-(1) |
| 12 | A-(2) |
| 13 | A-(3) |
| 14 | A-(4) |
| 15 | B-(1) |
| 16 | B-(3) |
| 17 | C-(1) |
| 18 | C-(3) |
| 19 | D-(3) |

Preparation (II) of Solutions (II)

(a) An epoxy resin [Tradename: EPOXY 863 produced by Mitsui Chemical K.K; Solution of a liquid epoxy resin with 46% by weight of nonvolatile matter in a solvent having the composition of propylene glycol monomethyl acetate/toluene/isopropyl alcohol/methyl ethyl ketone/n-butanol at a weight ratio of 10/50/10/20/10], (b) butylated melamine resin [Tradename: U-VAN 22R produced by Mitsui Chemical K.K.; Solution of butylated melamine resin with 50% by weight of nonvolatile matter in a solvent having the composition of butanol/xylol at a weight ratio of 60/40] as a hardener, and (e) a polyvinyl butyral resin [Product by Wako Junyaku Kogyo K. K.. Degree of polymerization: approximately 700] in respective amounts by gram(s) given in Table 2 were added to 800 g of tetrahydrofuran and dissolved therein to thereby prepare Solution No. 21 and Solution No. 22.

Table 2

| Solution No. | (a) Epoxy resin | (b) Hardener (Butylated melamine resin) | (e) Polyvinyl butyral resin |
|---|---|---|---|
| 21 | 700 g | 320 g | 0 g |
| 22 | 700 g | 320 g | 32 g |

Preparation or liquid rust preventive compositions:

(Coating solutions)

A solution (I) prepared in Solution Preparation (I) is mixed with a solution (II) prepared in Solution Preparation (II) to prepare a mixed solution I/II, which means (Solution No. of Solution (I))/(Solution No. of Solution (II)) in Table 3. To the mixed solution I/II was added (d) a silicic acid compound [a colloidal silica with a solid content or $SiO_2$ content of 25% by weight and an average particle size of 10-20 nm; Tradename: MA-ST produced by Nissan Chemical Kogyo K.K.] in an amount given in Table 3, followed by mixing with stirring to thereby prepare Coating liquid Nos. 101 to 112 as given in Table 3. In Table 3, part(s)" and "%" stand for "part(s) by weight and "% by weight", respectively.

Table 3

| Coating solution No. | Mixed solution I/II | Amount of Colloidal Silica (d) (g) | (a) Epoxy resin (parts) | (b) Butylated resin (parts) | (c) Aromatic amine-based condensation product (parts) | (d) Colloidal Silica (parts) | (e) Polyvinyl butyral resin (parts) | Non-volatile matter (%) of (a)+(b)+(c)+(d)+(e) |
|---|---|---|---|---|---|---|---|---|
| 101 | 17/22 | 160 | 100 | 50 | 12.4 | 12.4 | 10 | 21.0 |
| 102 | 18/22 | 160 | 100 | 50 | 12.4 | 12.4 | 10 | 21.0 |
| 103 | 19/22 | 160 | 100 | 50 | 12.4 | 12.4 | 10 | 21.0 |
| 104 | 17/21 | 160 | 100 | 50 | 12.4 | 12.4 | 0 | 20.1 |
| 105 | 15/22 | 160 | 100 | 50 | 12.4 | 12.4 | 10 | 21.0 |
| 106 | 16/21 | 160 | 100 | 50 | 12.4 | 12.4 | 0 | 20.1 |
| 107 | 11/21 | 160 | 100 | 50 | 12.4 | 12.4 | 0 | 20.1 |
| 108 | 12/21 | 160 | 100 | 50 | 12.4 | 12.4 | 0 | 20.1 |
| 109 | 13/21 | 160 | 100 | 50 | 12.4 | 12.4 | 0 | 20.1 |
| 110 | 14/21 | 160 | 100 | 50 | 12.4 | 12.4 | 0 | 20.1 |
| *111 | 11/21 | 0 | 100 | 50 | 12.4 | 0 | 0 | 19.8 |
| *112 | 11/- | 160 | 0 | 0 | 100 | 100 | 0 | 8.2 |
| 113 | 17/22 | 0 | 100 | 50 | 12.4 | 0 | 10 | 20.8 |
| 114 | 19/22 | 0 | 100 | 50 | 12.4 | 0 | 10 | 20.8 |

Evaluation test

--Specimen Steel Plates I--

As specimen steel plates I, there were used rolled steel plates (SDCC-D) each measuring 150mm x 70mm x 0.8mm of which surfaces have been electroplated with Zn(99.5 wt.%)-Fe(0.2 wt.%)-Co(0.3 wt.%) alloy.

--Specimen Steel Plates II--

The specimen steel plates I stated above were dipped in a 15 % by weight phosphoric acid solution [Solvent composition: water/methanol = 55/30 (weight ratio)] at room temperature for 15 min. and subsequently washed with water. After the washing with water, the plates were dried at 160°C for 5 min., so that specimen steel plates II having a phosphate coating film on the surfaces thereof were produced.

--Specimen Steel Plates III--

As given in Table 4, each of Coating solution Nos. 101 to 112 was applied to a specimen plate I or II by spraying, and was then dried by leaving the plate at 160°C for 15 min. Thus were produced specimen plates III having a coating film of a rust preventive composition with a thickness of 15 μm on the surfaces thereof.
The specimen steel plates III thus produced were subjected to the tests below. The results are given in Table 4.

--Corrosion resistance test--

In accordance with JIS Z-2371, the salt spray test was carried out on a specimen steel plate III. The specimen steel plate was visually observed every 24 hours, and the time (hour) until a white rust having an area of 5 % or more of the entire surface area of the specimen steel plate was formed was measured.

--Hardness test--

In accordance with JIS K 5004, the hardness of the coating film on a specimen steel plate III was tested by scratching with leads with different hardnesses_(2B, B, HB, F, H, 2H, 3H, 4H AND 5H)of pencils. The hardness of the coating film was evaluated by the maximum of the lead hardness which does not generate any scratch on the surface of the coating film.

--Adhesion test--

In accordance with JIS K 5004, the coating film on a specimen steel plate was subjected to the cross cut test under the conditions below.

- Conditions of cross cut

Interval of cut lines:     1 mm
Number of lattices:     100

- Evaluation

Score:     10, 8, 6, 4, 2 or 0

Assuming that the case where peeling has not occurred at any lattices is scored 10, and the case where peeling has occurred at 65% or more of lattices is scored 0, the results are ranked in 6 levels.

Evaluation of appearance:

The appearance or color of the coating film on a specimen steel plate III was visually observed.

Table 4

| Exp. No. | Solution No. used in coating film formation | Specimen plate steel used in coating film formation | Appearance (color) of the coating film | Corrosion resistAnce (hours) | Hardness test for coating film | Adhesion test for Coating film (Cross cut test) (Score) |
|---|---|---|---|---|---|---|
| 201 | 101 | II(coated with phosphate) | Black | 144 | 5H | 10 |
| 202 | 102 | II(coated with phosphate) | Black | 144 | 5H | 10 |
| 203 | 103 | II(coated with phosphate) | Black | 144 | 5H | 10 |
| 204 | 104 | I | Black | 120 | 5H | 8 |
| 205 | 101 | I | Black | 120 | 5H | 10 |
| 206 | 105 | I | Black | 120 | 5H | 8 |
| 207 | 106 | I | Black | 120 | 5H | 8 |
| 208 | 107 | I | Black | 120 | 3H | 8 |
| 209 | 108 | I | Black | 120 | 3H | 8 |
| 210 | 109 | I | Black | 120 | 3H | 8 |

Table 4 (continued)

| Exp. No. | Solution No. used in coating film formation | Specimen plate steel used in coating film formation | Appearance (color) of the coating film | Corrosion resistAnce (hours) | Hardness test for coating film | Adhesion test for Coating film (Cross cut test) (Score) |
|---|---|---|---|---|---|---|
| 211 | 110 | I | Purplish black | 120 | 3H | 8 |
| *212 | 111 | I | Black | 96 | 3H | 4 |
| *213 | 112 | I | Black | 72 | HB | 2 |
| 214 | 113 | I | Black | 120 | 5H | 8 |
| 215 | 114 | I | Black | 120 | 5H | 8 |

As described above, the rust-preventive composition of the present invention has a good corrosion resistance comparable to chromate treatment, and is free from any sanitary anxiety such as carcinogenesis, and further the surface of metal coated therewith is black or blackish; therefore, the composition is suited for primary rust-preventive treatment. Especially, formation of a coating film of phosphate on a base of zinc or a zinc alloy followed by formation of a coating film of the composition, can markedly improve the corrosion resistance of the metal.

## Claims

1.  A rust preventive composition comprising (a) an epoxy resin, (b) a hardener, (c) an aromatic amine-based condensation product, and a compound selected from the group consisting of (d) a silicic acid compound and (e) a polyvinyl butyral resin.

2.  The rust preventive composition of claim 1, wherein said epoxy resin is a member selected from the group consisting of bisphenol A type epoxy resin and carboxyl-modified epoxy resin.

3.  The rust preventive composition of claim 1 or 2, wherein the hardener is a member selected from the group consisting of amino resins, blocked polyisocyanate resins and phenol resins.

4.  The rust preventive composition of any one of claims 1-3, wherein the amounts of the hardener (b), the aromatic amine-based condensation product (c), and the compound selected from the group consisting of a silicic acid compound and a polyvinyl butyral resin are in the range of 10 to 150 parts by weight, 1 to 200 parts by weight, and 1 to 100 parts by weight, respectively, per 100 parts by weight of the epoxy resin (a).

5.  The rust preventive composition of any one of claims 1-4, wherein said aromatic amine-based condensation product is selected from the group consisting of (A) an aromatic amine compound condensation product, (B) an alkali-treated product of the aromatic amine compound condensation product (A), (C) a higher fatty acid-treated product or aromatic carboxylic acid-treated product of the aromatic amine compound condensation product (A), and (D) an alkylation product, alkenylation product and aralkylation product of the aromatic amine compound condensation product (A).

6.  The rust preventive composition of any one of preceding claims, wherein the silicic acid compound is a compound selected from the group consisting of silicic acid esters, colloidal silica and alkali metal silicates.

7.  The rust preventive composition of any one of preceding claims, which further comprises a solvent and is in the state of a liquid composition, and wherein the total concentration of the components (a), (b), (c), and (d) and/or (e) is in the range of 0.1 to 40 % by weight based on the total weight of the liquid composition.

8.  The rust preventive composition of any one of preceding claims, which further comprises inorganic acid and/or organic acid.

9.  Use of the rust preventive composition according to any one of preceding claims in preventing zinc or a zinc alloy from rusting.

10. A method of preventing zinc or a zinc alloy from rusting, which comprises forming a coating film of a phosphate on the surface of a base comprised of zinc or a zinc alloy, and forming a coating film of the composition according to any one of claims 1 to 8 on said film of a phosphate.